# EUROPEAN PATENT SPECIFICATION

(11) **EP 0 499 593 B1**
(45) Date of publication and mention of the grant of the patent: **02.05.2001**
(21) Application number: 92830061.5
(22) Date of filing: 12.02.1992
(51) Int. Cl.: H01M 8/04, H01M 8/10, C25B 13/08

(54) **Structure of electrochemical cell for wetting diaphragm of solid polymer electrolyte**
Struktur einer elektrochemischen Zelle zum Benetzen des aus festem Polymerelektrolyt bestehenden Diaphragmas
Structure d'une cellule électrochimique pour mouiller le diaphragme constitué d'un électrolyte polymère solide

(30) Priority: 14.02.1991 JP 4258891
(43) Date of publication of application: 19.08.1992
(73) Proprietor: Tanaka Kikinzoku Kogyo K.K., Chuo-ku Tokyo (JP); Watanabe, Masahiro, Kofu-shi, Yamanashi 400-0001 (JP)
(72) Inventor: Watanabe, Masahiro, Kofu-shi, Yamanashi (JP)
(74) Representative: Pellegri, Alberto

(56) References cited:
- EP-A- 0 119 080
- EP-A- 0 328 115
- CH-A- 655 615
- CHEMICAL ABSTRACTS, vol. 115, no. 22, December 2, 1991, Columbus, Ohio, USA FURUYA, CHOICHI et al. "Solid polymer-electrolyte fuel cells.", page 253, abstract-no. 236 311w

## Description

The present invention relates to an electrochemical cell such as a fuel cell and to an electrolytic cell employing a solid polymer electrolyte (hereinafter referred to as "PE") and having improved means for wetting the solid polymer electrolyte for attaining high performance.

A fuel cell has been developed as an anti-pollution electric power generator having high energy efficiency in view of problems of exhaustion of energy resources and global environmental pollution.

A fuel cell employing a PE is expected to be a lightweight and high power generator which may be useful as a small-size electric source for an electric automobile or the like (disclosed in reference 1; D. Watkins et al., Proceeding of the 33rd International Power Sources Symposium, PP.782 to 791, 13 to 16, June (1988), and in reference 2; E. A. Ticianelli et al., J. Electrochemical Society, 135, 2209, (1988)).

An electrolytic cell using a PE is expected to be employed in electro-synthesis starting from such a gaseous hydrocarbon or alcohol as methanol and the like in future.

The performance of these cells is largely influenced by the ionic conductivity of the PE employed.

When a sufficient amount of water is not contained in the PE, its conductivity considerably decreases, thus the increase of resistance lowers the cell performance.

In order to overcome said drawback, a reaction gas (a hydrogen gas as a fuel and oxygen or air as an oxidant) containing water vapor may be introduced into the cell.

Since, in such an improved cell, the partial pressure of the reaction gas decreases due to a dilution with water vapor by an amount equivalent to the partial pressure of the water vapor, diffusion of the reaction gas in the reaction layer of an electrode is depressed and the performance of the cell may deteriorate.

Since the partial water vapor pressure changes with a changing load and cannot be sufficiently controlled, either the PE dries excessively or the catalyst layer is overwetted (flooded), both conditions resulting in deterioration of the cell performance.

The largest amount of H₂O is lost from the anode side of the PE because several hydration molecules of H₂O accompany an H⁺ ion permeating through the PE from the anode side to the cathode side, in an amount that is proportional to the current. However, this migration mechanism of H₂O from the anode side to the cathode side is difficult to overcome by said water vapor admixing process (disclosed in the reference ; T. Springr et al., Extended Abstract No.118, J. Electrochemical Society Meeting, vol. 190-2, Oct. (1990)).

Accordingly, these problems should be necessarily overcome for successfully employing the fuel cell as a moving electric source whose load is highly variable, and the same problems exist also for an electrolytic cell using a PE.

EP-A-0119080-A2 discloses a reinforced ion exchange membrane wherein voids of 5 to 40% void volume and open area of 15 to 100% are produced on one face of the membrane by leaching sacrificial strands partially embedded in the membrane film during lamination. Moreover, a porous, gas and liquid permeable layer is in adherent contact with the other face of the membrane for promoting the release of hydrogen bubble which because of surface tension effects would tend to stick and eventually film the surface of the polymeric membrane.

EP-A-0328115-A1, discloses a fuel cell with means for pumping water through the pores of a porous graphite plate or water permeable membrane disposed in contact with a catalyst layer bonded on one face of an ion exchange membrane.

CH-A-655615-A5 discloses a solid polymer electrolyte cell using a perfluorinated ion exchange membrane which is swelled by hydrating it at a high temperature for promoting absorption of water.

Japanese patent application No. 89/163,730 discloses fuel cells employing a solid polymer electrolyte membrane using grooved separators plates for supplying reagent species and water to maintain the water content and temperature of the ion exchange membrane (Nafion 117) at desired levels for enabling the fuel cell to quickly respond to load changes.

### Summary of the Invention

An object of the present invention is to provide an electrochemical cell for overcoming the problems mentioned above and for successfully utilizing such an electrochemical cell employing a PE as a fuel cell and as an electrolytic cell.

Another object is to provide an electrochemical cell with a high performance by wetting a PE with water supplied thereto through a narrow conduit. These objects are met by the invention as defined in the claims.

A considerable lowering of the value of the membrane resistance can he realized by employing the membrane wetted in accordance with the present invention so that, consequently, the elevation of the cell voltage is obtained to overcome the conventional drawbacks at one effort that proves the invention to be epoch-making.

### Brief Description of the Invention

Fig. 1 is a perspective view of a PE membrane having embedded therein twisted yarns, and joined with and interposed between an anode and a cathode;
Fig. 2 is a sectional view of a fuel cell employing the PE membrane assembled into a single cell having a sealing structure; and
Fig.3 is a graph showing the dependence of the membrane resistance on current density in a structure of a wetted PE of the invention.

### Detailed Description of the Invention

The present invention will be hereinafter described in detail.

The above-mentioned problems can be easily overcome by employing a PE as a diaphragm and by changing the amount of water that is unilaterally supplied through narrow conduits purposely formed in the diaphragm, according to operation conditions (current density, temperature and the like).

If the narrow conduits for supplying the water are formed by embedding corrosion-resistant, twisted yarns at uniform intervals and in the same direction, the water supplied through the corrosion-resistant yarns is promptly absorbed into the PE by capillarity.

Moreover, when the capillary conduits for supplying water are "eccentrically" disposed nearer to an anode side than to a cathode side of the PE diaphragm, an excessive drying of the anode side portion thus can be prevented.

The PE diaphragm may be prepared in laboratories as follows. At first, for example, twisted yarns are disposed at an interval of 1 mm on a Nafion membrane functioning as a PE. A thin film composed of an aluminum foil and a Nafion layer is prepared by applying a Nafion solution on the aluminum foil. Then, the film is disposed on the arranged yarns and is hot-pressed to prepare the above diaphragm. The aluminum foil is peeled off the diaphragm. The diaphragm may be industrially prepared by incorporating the yarns arranged as mentioned above in an ion exchange membrane to unifying them. For the purpose of reinforcing the membrane, yarns (orthogonally) crossing the above mentioned yarns or a woven cloth or unwoven cloth may also be embedded in the membrane.

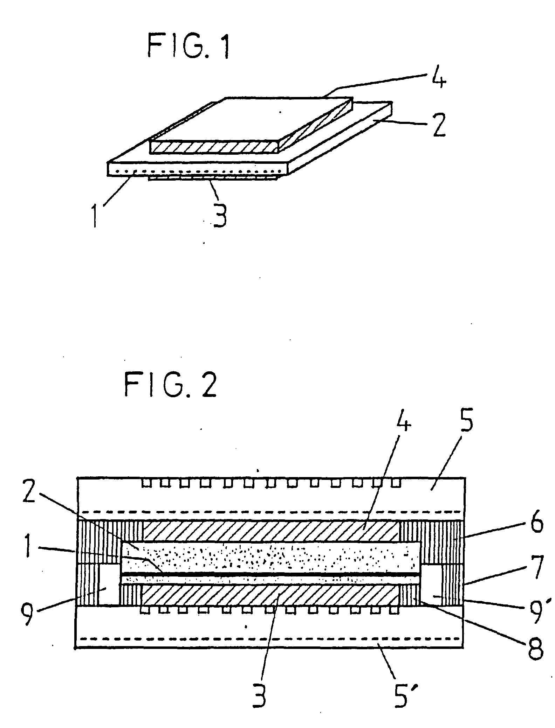

Fig.1 shows one Embodiment of a fuel cell according to the invention which consists of a PE diaphragm 2 and, an anode 3 and a cathode 4 functioning as gas diffusion electrodes, attached on each side of the diaphragm 2, and a capillary water supply path 1 (conduits formed by embedding the twisted yarns) formed in the diaphragm 2.

The structure in section of the fuel cell is illustrated in Fig.2 in which the diaphragm 2 is fixed and sealed by employing packings 6,7,8 between a pair of bipolar plates 5, 5' for gas supply which also function as a separator and a current collector.

Water, introduced in a lower portion of a stack, through an intercellular connection conduit is delivered from a liquid reservoir (inlet side) 9 through the water supply conduit 1 to the PE diaphragm 2. Water is then discharged through another liquid reservoir (outlet side) 9', and then flown out from an upper portion of the stack after having reached the top of said intercellular connection conduit.

The degree of humidification of the PE can be promptly controlled by changing the delivery pressure of the water in accordance with operation conditions.

Although the PE membrane having embedded therein twisted yarns as capillary paths for supplying water into the PE is preferably employed in this invention, the present invention is not restricted thereto. Alternatively a PE membrane having embedded therein twisted yarns made of hollow fibers (for example, polyester hollow fibers having an outer diameter of 20 µm and an inner diameter of 7 to 8 µm), preferentially with penetrating fine apertures through the wall of the hollow fiber, may be employed. When such a PE membrane is employed, the water is made available also through the fine apertures of the wall of the hollow fibers because the embedded twisted yarns are composed of the hollow fibers so that the hollow portions of the fibers are impregnated with water. Accordingly, because of the enhanced supply of water to the PE, the conduits for supplying water can be made narrower depending on the increase of the water supply so that the electroconductivity can be effectively elevated by making the overall thickness of the PE membrane thinner.

Although Example of the present invention will be hereinafter described, this Example does not restrict the present invention.

### Example

On commercially available PE (Du Pont; Nafion 117^{R}) having a thickness of about 0.15 mm and a dimension of 50 X 50 mm, 48 twisted yarns having a diameter of about 0.1 mm were disposed at an interval of 1 mm.

Separately, an aluminum foil on the surface of which had been applied liquid PE (Du Pont; Nafion) to form a film having a thickness of 0.05 mm and a dimension of 50 X 50 mm was disposed on the yarns, and was hot-pressed at 150 °C and 50 kg/cm² followed by peeling off the aluminum foil to prepare a PE membrane embedded with the twisted yarns functioning as a narrow path for supplying water.

Gas diffusion electrodes for an anode and a cathode employed in an ordinary phosphoric acid type fuel cell were prepared by loading 30 % in weight of a platinum catalyst on carbon black so as to attain a supporting ratio of 0.5 mg-catalyst/cm². On the surface of this catalyst layer, Nafion dissolved in solvent was applied and impregnated at the ratio of 4 mg/cm² according to a method mentioned in the above reference 2.

Thereafter, between the two sheets functioning as an anode and a cathode, the PE membrane prepared as mentioned above was interposed which was then hot-pressed at 25 kg/cm² and 150 °C to prepare a fuel cell employing the PE membrane.

### Comparative Example

The fuel cell employing the PE membrane was prepared according to the same procedures of Example except that only the commercially available PE membrane mentioned above was employed in place of the membrane of Example.

The respective fuel cells as prepared in Example and Comparative Example were incorporated in a single cell test apparatus having a cell structure of Fig. 2, and a reference electrode was installed in the water reservoir (inlet side) 9. The respective values of the membrane resistance of the anode side portion and of the cathode side portion were measured and compared under various conditions employing a current interruption method. The results are shown in Table 1.

Table 1 shows comparison of the resistance values per unit area of the PE membranes wetted by means of a process of this invention and a conventional vapor wetting method (reaction gases of the anode and cathode were both saturated with H₂O at 60 °C) (the fuel cells being operated at 60 °C).

**Table 1**

| Wetting Process | Wett. Process of Invention | Vapor Wett. Process |
|---|---|---|
| Resistance (A-C) | 0.205 Ω | 0.295 Ω |
| Resistance (A-R) | 0.140 Q | 0.220 Ω |
| Resistance (C-R) | 0.070 Ω | 0.070 Ω |
| A-C; Resistance Between Anode and Cathode | | |
| A-R; Resistance Between Anode and Reference Electrode | | |
| C-R; Resistance Between Cathode and Reference Electrode | | |

As apparent from the A-C values of Table 1, the resistance value of whole membrane according to the Example dropped to about two-thirds of that of a conventional wetting process. As apparent from comparison of A-R, it is evident that the embodiment has remarkable effects because the drying of, especially, the anode side portion of the membrane is contrasted thus bringing about a considerable lowering of the value of the membrane resistance. Owing to the lowering of the membrane resistance, an increase of the single cell voltage of about 50 mV in case of electricity generation at 500 mΛ/cm², and of 100 mV in case of electricity generation at 1 Λ/cm² was obtained.

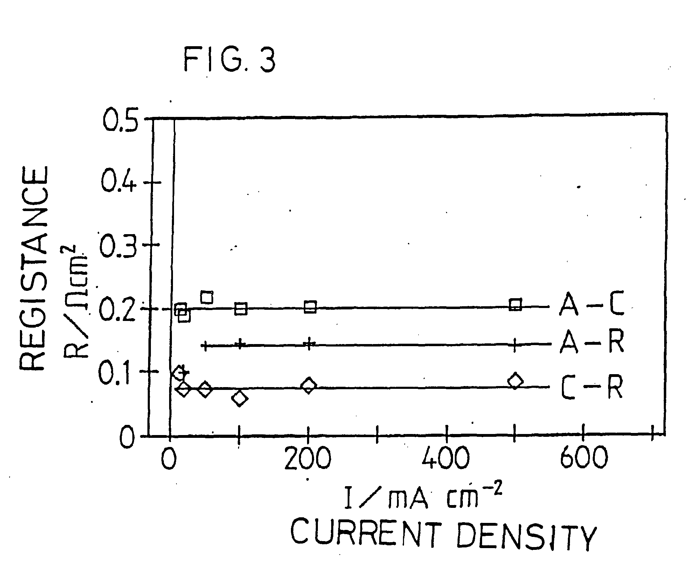

Fig. 3 shows the dependence of the resistance on the current density. It can be seen that, at high current density electricity generation, at least up to 500 mA/cm², the operation can be carried out without an increase of the resistance value.

## Claims

1. An electrochemical cell which comprises a membrane made of a solid polymer electrolyte having a plurality of substantially linear conduits extending along a major dimension of the membrane from edge to edge for supplying water into the solid polymer electrolyte constituted by corrosion resistant twisted yarns embedded in the polymer electrolyte at a uniform interval and oriented in the same direction of said major dimension.

2. The electrochemical cell as claimed in claim 1, wherein said conduits in the solid polymer electrolyte are not at the center of the thickness of the membrane.

3. The electrochemical cell as claimed in claim 1, wherein said conduits in the solid polymer electrolyte are nearer to the anode side of the solid polymer electrolyte than to the cathode side thereof.

4. The electrochemical cell as claimed in claim 1, characterized in that it comprises pumping means for changing the amount and the supply rate of water.

5. The electrochemical cell as defined in claim 1, wherein said conduits in the solid polymer electrolyte are provided by twisted yarns made of hollow fibers embedded therein.

6. The electrochemical cell as defined in claim 1, wherein the solid polymer electrolyte additionally includes a woven cloth embedded therein.

7. Method for delivering hydration water to a solid polymer electrolyte in order to make-up for hydration water migration from the anode side to the cathode side in a gas-operated electrochemical cell, which consists of continuously introducing make-up, hydration water into the solid polymer electrolyte by supplying water through a plurality of capillary conduits constituted by corrosion resistant twisted yarns embedded in the anode side portion of a solid polymer electrolyte membrane at a uniform interval and extending in the same direction from one edge to the opposite edge of the membrane.

## Patentansprüche

1. Elektrochemische Zelle, die eine Membran umfaßt, die aus einem Festkörperelektrolyt hergestellt ist und mehrere im wesentlichen geradlinige Leitungen besitzt, die sich in einer Hauptrichtung der Membran von einer Kante zur anderen erstrecken, um dem Festkörper-Polymerelektrolyt Wasser zuzuführen, und durch korrosionsbeständige verdrillte Fäden gebildet sind, die in den Polymerelektrolyt in einem gleichmäßigen Intervall eingebettet sind und in die gleiche Richtung wie die Hauptrichtung orientiert sind.

2. Elektrochemische Zelle nach Anspruch 1, bei der sich die Leitungen im Festkörper-Polymerelektrolyt in Dickenrichtung der Membran nicht in der Mitte befinden.

3. Elektrochemische Zelle nach Anspruch 1, bei der sich die Leitungen im Festkörper-Polymerelektrolyt mehr auf der Anodenseite des Festkörper-Polymerelektrolyts als auf seiner Katodenseite befinden.

4. Elektrochemische Zelle nach Anspruch 1, dadurch gekennzeichnet, daß sie Pumpmittel zum Ändern der Menge und der Zuführungsrate des Wassers umfaßt.

5. Elektrochemische Zelle nach Anspruch 1, bei der die Leitungen im Festkörper-Polymerelektrolyt durch verdrillte Fäden, die aus darin eingebetteten Hohlfasern hergestellt sind, gebildet sind.

6. Elektrochemische Zelle nach Anspruch 1, bei der der Festkörper-Polymerelektrolyt zusätzlich ein darin eingebettetes Gewebe enthält.

7. Verfahren zum Abgeben von Hydratationswasser an einen Festkörper-Polymerelektrolyt, um in einer gasbetriebenen elektrochemischen Zelle eine Hydrationswasser-Migration von der Anodenseite zur Katodenseite hervorzurufen, wobei das Verfahren umfaßt: ununterbrochenes Einleiten von Auslöse-Hydrationswasser in den Festkörper-Polymerelektrolyt durch Zuführen von Wasser durch mehrere Kapillarleitungen, die durch korrosionsbeständige verdrillte Fäden gebildet sind, die in dem anodenseitigen Abschnitt einer Festkörper-Polymerelektrolyt-Membran in einem gleichmäßigen Intervall eingebettet sind und sich von einer Kante zur gegenüberliegenden Kante der Membran in der gleichen Richtung erstrecken.

## Revendications

1. Pile électrochimique comprenant une membrane constituée d'un électrolyte polymère solide comprenant une pluralité de conduits sensiblement rectilignes s'étendant selon une dimension principale de la membrane d'un bord à l'autre pour fournir de l'eau dans l'électrolyte polymère solide constitués de fibres enroulées résistant à la corrosion dans l'électrolyte polymère à intervalles uniformes et orientées dans la direction de la dimension principale.

2. Pile électrochimique selon la revendication 1, dans laquelle les conduits dans l'électrolyte polymère solide ne sont pas au centre de l'épaisseur de la membrane.

3. Pile électrochimique selon la revendication 1, dans laquelle les conduits dans l'électrolyte polymère solide sont plus proches du côté anode de l'électrolyte polymère solide que de son côté cathode.

4. Pile électrochimique selon la revendication 1, caractérisée en ce qu'elle comprend un moyen de pompage pour modifier la quantité et le débit d'eau.

5. Pile électrochimique selon la revendication 1, dans laquelle les conduits dans l'électrolyte polymère solide sont formés de fibres enroulées constituées de fibres creuses qui y sont logées.

6. Pile électrochimique selon la revendication 1, dans laquelle l'électrolyte polymère solide comprend un tissu tissé qui y est logé.

7. Procédé pour fournir de l'eau d'hydratation à un électrolyte polymère solide pour réaliser une migration d'eau d'hydratation du côté anode au côté cathode dans une pile électrochimique à gaz qui comprend l'introduction en continu d'eau d'hydratation dans l'électrolyte polymère solide en fournissant de l'eau à travers une pluralité de conduits capillaires constitués de fibres enroulées résistant à la corrosion logées dans la partie située du côté anode d'une membrane d'électrolyte polymère solide, à intervalles uniformes, et s'étendant dans la même direction d'un bord au bord opposé de la membrane.
